(19) Europäisches Patentamt
European Patent Office
Office européen des brevets

(11) **EP 0 927 377 B2**

(12) **NOUVEAU FASCICULE DE BREVET EUROPEEN**
Après la procédure d'opposition

(45) Date de publication et mention de la décision concernant l'opposition:
**05.12.2018 Bulletin 2018/49**

(45) Mention de la délivrance du brevet:
**24.07.2002 Bulletin 2002/30**

(21) Numéro de dépôt: 97940198.1

(22) Date de dépôt: **09.09.1997**

(51) Int Cl.:
***G02C 7/02*** *(2006.01)*

(86) Numéro de dépôt international:
**PCT/FR1997/001583**

(87) Numéro de publication internationale:
**WO 1998/012590 (26.03.1998 Gazette 1998/12)**

(54) **JEU DE LENTILLES OPHTALMIQUES MULTIFOCALES PROGRESSIVES**

SERIE PROGRESSIVER OPHTALMISCHER MULTIFOKALER LINSEN

SET OF PROGRESSIVE MULTIFOCAL OPHTHALMIC LENSES

(84) Etats contractants désignés:
**DE ES FR GB IE IT NL**

(30) Priorité: **20.09.1996 FR 9611478**

(43) Date de publication de la demande:
**07.07.1999 Bulletin 1999/27**

(73) Titulaire: **Essilor International
94220 Charenton-le-Pont (FR)**

(72) Inventeurs:
• **BAUDART, Thierry**
  **F-94340 Joinville-le-Pont (FR)**
• **BOURDONCLE, Bernard**
  **F-75012 Paris (FR)**
• **LALOUX, Thierry**
  **F-75020 Paris (FR)**
• **PEDRONO, Claude**
  **F-91640 Briis-sous-Forges (FR)**
• **ROSSIER, Claire**
  **F-75012 Paris (FR)**

(74) Mandataire: **August Debouzy
6-8, avenue de Messine
75008 Paris (FR)**

(56) Documents cités:
EP-A- 0 562 336      DE-C3- 2 814 916
GB-A- 2 261 527      GB-A- 2 273 369
GB-A- 2 294 553      US-A- 5 444 503

• STOLLENWERK G.: 'AUF FERNE ODER AUF NäHE' OPTISCHE BRILLENFASSUNG, NOJ vol. 1, 1994, pages 14 - 27
• GUILINO G. ET AL: 'PROGRESSIV R - DAS NEUE RODENSTOCK-PROGRESSIV-GLAS' OPTOMETRIE vol. 5, 1981, pages 266 - 271
• GUILINO G.: 'MEHRSTäRKENGLäSER' DER AUGENOPTIKER vol. 32, no. CAHIER 7+8, 1977, pages 2 - 12
• 'HANDBUCH FUR AUGENOPTIK, 3èME EDITION', 1987, CARL ZEISS pages 3, 120-125 - 308 ET 309
• BARTH R. ET AL: 'PROSECTAL - DIE ERSTE PROGRESSIVE HALBBRILLE' 37. SONDERDRUCK DER WVAO 1985, pages 1, 167 - 171
• KRATZER B.J.L. ET AL: 'GRADAL TOP - EIN NEUES GLEITSICHTGLAS' 48. SONDERDRUCK DER WVAO 1996, pages 57 - 63
• KRATZER B.J.L. ET AL: 'ÜBER DIE MESSBARKEIT DER DIOPTRISCHEN WIRKUNGEN VON BRILLENGLÄSERN' DOZ no. 9, 1979, pages 16 - 22
• BRONSTEIN I.N. ET AL: 'TASCHENBUCH DER MATHEMATIK, 24. AUFLAGE', 1989, VERLAG HARRI DEUTSCH THUN UND FRANKFURT/MAIN pages 564 - 565

EP 0 927 377 B2

## Description

La présente invention a pour objet un jeu de lentilles ophtalmiques multifocales progressives; elle concerne aussi un procédé de détermination d'un ergorama pour un jeu de lentilles ophtalmiques multifocales progressives, ledit ergorama associant pour chaque lentille un point visé à chaque direction du regard dans les conditions du porté. Enfin, elle a aussi pour objet un procédé de définition d'une lentille ophtalmique progressive.

Les lentilles ophtalmiques multifocales progressives sont maintenant bien connues. Elles sont utilisées pour corriger la presbytie et permettent au porteur des lunettes d'observer des objets dans une large gamme de distances, sans avoir à retirer ses lunettes. De telles lentilles comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne principale de progression traversant ces trois zones.

Le document FR-A-2 699 294 décrit dans son préambule les différents éléments d'une telle lentille ophtalmique multifocale progressive, ainsi que les travaux menés par la demanderesse pour améliorer le confort des porteurs de telles lentilles. On se référera à ce document pour plus de précisions sur ces différents points.

La demanderesse a aussi proposé, par exemple dans les brevets US-A-5 270 745 ou US-A-5 272 495 de faire varier la méridienne, et notamment son décentrement en un point de contrôle de la vision de près, en fonction de l'addition et de l'amétropie.

La demanderesse a encore proposé, pour mieux satisfaire les besoins visuels des presbytes et améliorer le confort des lentilles multifocales progressives, diverses améliorations (FR-A-2 683 642, FR-A-2 699 294, FR-A-2 704 327). FR-A-2 683 642 suggère de prendre en compte pour la définition de la méridienne de la lentille les positions de l'oeil dans l'orbite; ces positions dépendent de la distance de vision et de l'inclinaison de la tête dans le plan sagittal.

Habituellement, ces lentilles multifocales progressives comportent une face avant asphérique, qui est la face opposée au porteur des lunettes, et une face arrière sphérique ou torique, dirigée vers le porteur des lunettes. Cette face sphérique ou torique permet d'adapter la lentille à l'amétropie de l'utilisateur, de sorte qu'une lentille multifocale progressive n'est généralement définie que par sa surface asphérique. Comme il est bien connu, une telle surface asphérique est généralement définie par l'altitude de tous ses points. On utilise aussi les paramètres constitués par les courbures minimales et maximales en chaque point, ou plus couramment leur demi-somme et leur différence. Cette demi-somme et cette différence multipliées par un facteur n-1, n étant l'indice de réfraction du matériau de la lentille, sont appelées sphère moyenne ou puissance et cylindre.

On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée A, correspond à la variation de puissance entre un point L de la zone de vision de loin et un point P de la zone de vision de près, qui sont appelés respectivement point de mesure de la vision de loin et point de mesure de la vision de près, et qui représentent les points d'intersection du regard et de la surface de la lentille pour une vision à l'infini et pour une vision de lecture.

Dans une même famille de lentilles, l'addition varie d'une lentille à l'autre de la famille entre une valeur d'addition minimale et une valeur d'addition maximale. Habituellement, les valeurs minimale et maximale d'addition sont respectivement de 0.75 dioptrie et 3.5 dioptries, et l'addition varie de 0.25 dioptrie en 0.25 dioptrie d'une lentille à l'autre de la famille.

Des lentilles de même addition diffèrent par la valeur de la sphère moyenne en un point de référence, appelée aussi base. On peut par exemple choisir de mesurer la base au point L de mesure de la vision de loin.

On définit ainsi par le choix d'un couple (addition, base) un ensemble ou jeu de faces avant asphériques pour lentilles multifocales progressives. Habituellement, on peut ainsi définir 5 valeurs de bases et 12 valeurs d'additions, soient soixante faces avant. Dans chacune des bases, on réalise une optimisation pour une puissance donnée.

L'utilisation avec l'une de ces faces avant d'une face arrière sphérique ou torique voisine de la face arrière utilisée pour l'optimisation permet de couvrir l'ensemble des besoins des porteurs de lentilles multifocales progressives. Cette méthode connue permet, à partir de lentilles semi-finies, dont seule la face avant est conformée, de préparer des lentilles adaptées à chaque porteur, par simple usinage d'une face arrière sphérique ou torique.

Cette méthode présente l'inconvénient de n'être qu'une approximation; en conséquence, les résultats obtenus avec une face arrière différente de celle utilisée pour l'optimisation sont moins bons que ceux correspondant à la face arrière utilisé pour l'optimisation.

Il a été proposé, dans le document US-A-5,444,503 une lentille multifocale progressive dans laquelle la face arrière est adaptée à chaque porteur, et est constituée d'une surface asphérique. Cette surface asphérique n'est pas multifocale, et paraît calculée de sorte à fournir la puissance optique nécessaire en certains points de référence. Selon ce document, cette solution permettrait de pallier les défauts provenant du remplacement de la face arrière ayant servi à l'optimisation par une face arrière voisine.

Cette solution présente l'inconvénient de compliquer considérablement la fabrication des lentilles: elle implique de mesurer la position des lentilles sur le porteur, puis de déterminer et usiner une face arrière asphérique.

L'invention propose une lentille ophtalmique multifocale progressive dont l'esthétique est améliorée et qui présente des performances accrues par rapport aux lentilles connues en permettant de préserver la facilité d'adaptation de lentilles semi-finies à un porteur. Tout en conservant cette facilité de mise en oeuvre, l'invention assure que l'adaptation des lentilles par usinage simple de la face arrière n'induit pas de défauts de vision, même lorsque la face arrière est différente de la face arrière utilisée pour l'optimisation.

L'invention est définie à la revendication 1. Des caractéristiques additionnelles apparaissent dans les revendications dépendantes.

D'autres avantages et caractéristiques de l'invention apparaîtront à la lecture de la description qui suit de modes de réalisation de l'invention, donnés à titre d'exemple et en référence aux dessins qui montrent;

- figure 1, un schéma d'un système optique oeil et lentille;
- figure 2, un ordinogramme des différentes étapes de définition du point de référence pour la vision de près et de calcul de la courbe de Donders du porteur.
- figure 3, une représentation schématique des deux yeux et de la direction du regard.
- figure 4, une représentation graphique de la loi de Donders.
- figure 5, un ordinogramme des différentes étapes de calcul de l'ergorama en dehors du point de référence pour la vision de près.
- figure 6, l'allure typique d'un ergorama, en dioptries;
- figure 7, un exemple de la découpe de base qui peut être utilisée pour la réalisation de lentilles selon l'invention;
- figure 8, la variation de la puissance optique le long de la méridienne, pour les différentes additions, de 0.75 à 3.5 dioptries
- figure 9 des représentations graphiques correspondant à celles de la figure 8, pour une lentille de l'art antérieur;
- figure 10 une représentation analogue à celle de la figure 8, dans laquelle on a toutefois rajouté les représentations graphiques des puissances optiques porteur pour des lentilles correspondant aux puissances optiques extrêmes pour chaque base;
- figure 11 des représentations graphiques correspondant à celles de la figure 10, pour une lentille de l'art antérieur;
- figure 12 les résultats obtenus selon l'invention, en terme de variation par rapport à l'ergorama;
- figure 13 des résultats correspondant à ceux de la figure 12 pour l'aberration d'astigmatisme, pour la même lentille;
- figures 14 à 16, des représentations de puissance optique, d'aberration d'astigmatisme et de puissance optique le long de la méridienne pour une lentille connue;
- figures 17 à 19, des représentations de puissance optique, d'aberration d'astigmatisme et de puissance optique le long de la méridienne pour une première lentille selon l'invention.
- figures 20 à 22, des représentations de puissance optique, d'aberration d'astigmatisme et de puissance optique le long de la méridienne pour une deuxième lentille selon l'invention;

De façon connue en soi. en tout point d'une surface asphérique, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

On définit aussi un cylindre C, donné par la for-mule:

$$C = (n-1).\left|\frac{1}{R_1} - \frac{1}{R_2}\right|$$

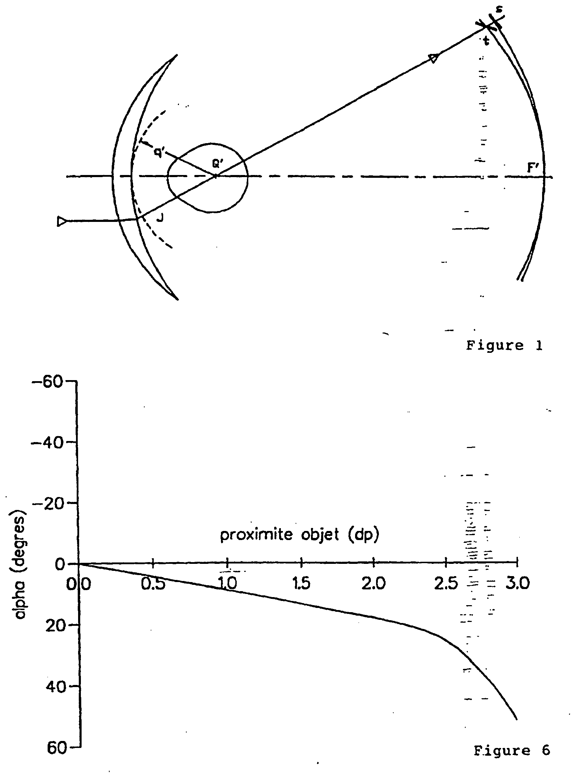

L'invention propose de définir les caractéristiques des lentilles non pas uniquement en termes de sphère moyenne ou de cylindre, mais de prendre en considération la situation du porteur des lentilles. La figure 1 montre à cet effet un schéma d'un système optique oeil et lentille.

Dans le schéma de la figure 1, le plan médian de la lentille est incliné par rapport à la verticale d'un angle correspondant à l'inclinaison habituelle des montures de lunettes. Cet angle est par exemple de 12°.

On appelle Q' le centre de rotation de l'oeil, et on définit une sphère des sommets, de centre Q', et de rayon q', qui est tangente à la face arrière de la lentille en un point de l'axe horizontal.

A titre d'exemple, une valeur du rayon q' de 27 mm correspond à une valeur courante et fournit des résultats satisfaisants lors au porté des lentilles.

Une direction donnée du regard correspond à un point J de la sphère des sommets, et peut aussi être repérée, en coordonnés sphériques, par deux angles alpha et bêta. L'angle alpha est l'angle formé entre la droite Q'J et le plan horizontal passant par le point Q', tandis que l'angle bêta est l'angle formé entre la droite Q'J et le plan vertical passant par le point Q'.

Une direction donnée du regard correspond à un point J de la sphère des sommets ou à un couple (alpha, bêta). Dans l'espace objet, on définit, pour un point M sur le rayon lumineux correspondant, une proximité objet PO comme l'inverse de la distance MJ entre le point M et le point J de la sphère des sommets:

$$PO = 1/MJ$$

Ceci permet un calcul de la proximité objet dans le cadre d'une approximation lentille mince en tout point de la sphère des sommets, qui est utilisée pour la détermination de l'ergorama, comme expliqué plus bas. Pour une lentille réelle, on peut à l'aide d'un programme de tracé de rayons considérer la proximité objet comme l'inverse de la distance entre le point objet et la surface avant de la lentille, sur le rayon correspondant. Ceci est décrit plus en détail plus bas lors de la description du processus d'optimisation.

Toujours pour la même direction du regard (alpha, bêta), l'image d'un point M ayant une proximité objet donnée se forme entre deux points S et T correspondant respectivement à des distances focales minimale et maximale (qui seraient des distances focales sagittale et tangentielle dans le cas de surfaces de révolution). On appelle proximité image du point M. la quantité:

$$PI = \frac{1}{2} \left( \frac{1}{JT} + \frac{1}{JS} \right)$$

Par analogie avec le cas de la lentille mince, on définit ainsi, dans une direction donnée du regard et pour une proximité objet donnée, i.e. pour un point de l'espace objet sur le rayon lumineux correspondant, une puissance optique comme la somme de la proximité image et de la proximité objet.

Avec les mêmes notations, on définit dans chaque direction du regard et pour une proximité objet donnée, une aberration d'astigmatisme AA comme

$$AA = \left| \frac{1}{JT} - \frac{1}{JS} \right|$$

Cette aberration d'astigmatisme correspond à l'astigmatisme du faisceau de rayons créé par la surface avant asphérique et la surface arrière sphérique.

On obtient ainsi deux définitions possibles selon l'invention de la puissance optique et de l'aberration d'astigmatisme de la lentille, dans les conditions du porté. On pourrait aussi utiliser d'autres définitions, mais celles ci présentent l'avantage d'être définies simplement. et de pouvoir être calculées facilement à l'aide d'un programme de tracé de rayons, pour une lentille donnée.

On définit par ailleurs selon l'invention un ergorama, qui donne, pour chaque direction du regard une proximité objet et une puissance porteur. L'ergorama est défini pour une situation donnée du porteur, i.e. pour un couple amétropie addition.

L'ergorama est ainsi une fonction qui à quatre variables - amétropie. addition, et direction du regard sous la forme des angles alpha et bêta - associe deux valeurs - une proximité objet et une puissance porteur.

L'ergorama ainsi défini peut être déterminé par des études et test physiologiques, ergonomiques et posturaux, et par la connaissance de lois optiques. On peut notamment considérer :

- les déviations prismatiques induites par la puissance rencontrée sur le verre déterminées par la règle de PRENTICE (Prisme = H*Puis.). Ces déviations prismatiques viennent modifier la position des yeux et de la tête de façon différente en fonction de l'amétropie;

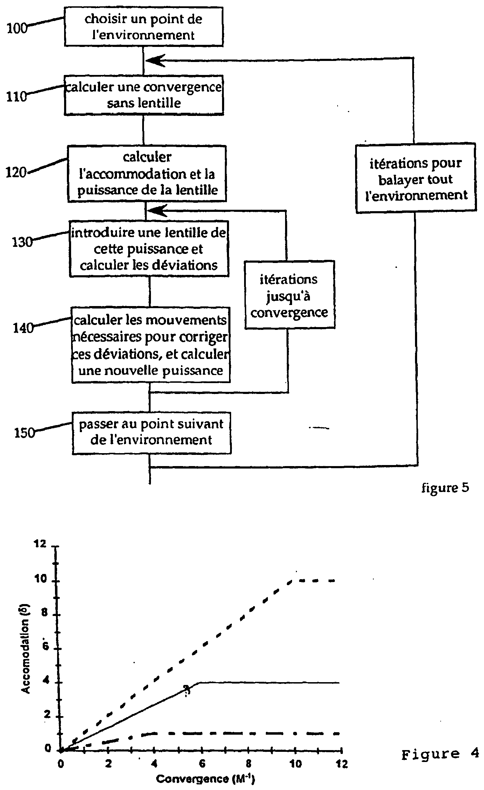

- l'accommodation subjective utilisée en fonction de l'addition prescrite, de l'amétropie et de la proximité de l'objet. Cette accommodation est calculée selon la règle de DONDERS améliorée reliant la convergence (ou proximité apparente de l'objet) et l'accommodation pour assurer une vision binoculaire normale; pour plus de détails sur cette loi, on pourra se reporter à la figure 4 décrite ci dessous;

- la baisse de l'acuité en fonction de l'âge qui peut se traduire par un rapprochement de la distance de vision de près quand l'addition augmente;

- les préférences posturales des porteurs dans un environnement donné qui déterminent une position de la tête et des yeux pour une tâche de vision de près et la stratégie visuo-motrice employée pour décrire cet environnement.

A titre d'exemple, on décrit un mode de détermination de l'ergorama, pour une amétropie donnée, par exemple par une puissance au point L de vision de loin. et pour une addition donnée.

Selon l'invention, on peut procéder de la façon suivante: tout d'abord, on détermine la direction du regard et la puissance pour regarder le point de vision de près. On en déduit la pente de la demi-droite de Donders. Ceci, associé à une stratégie de balayage, permet de déterminer la puissance pour les autres directions du regard.

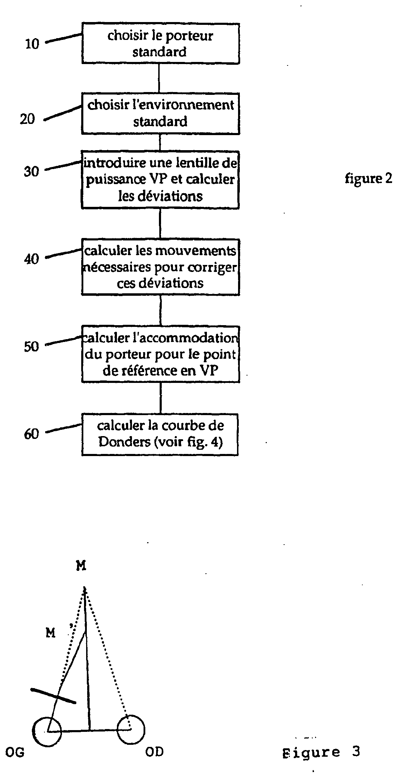

On explique maintenant plus en détail ce mode de détermination de l'ergorama, en référence aux figures 2 à 5, pour une lentille gauche. La figure 2 montre un ordinogramme des différentes étapes de définition du point de référence pour la vision de près et de calcul de la courbe de Donders du porteur.

Comme expliqué ci dessus, on commence par déterminer la direction du regard et la puissance pour regarder le point de vision de près.

Pour cela, on choisit les caractéristiques du porteur standard, étape 10 figure 2. On peut par exemple considérer que le porteur standard présente les caractéristiques suivantes: il est isométrope et orthopho-rique, les deux yeux accommodent de la même quantité et se déplacent de la même quantité en cas de version et de manière symétrique en cas de vergence; l'écart pupillaire est de 65mm, la distance verre - centre de rotation oculaire de 27mm, la distance centre de rotation oculaire - centre de rotation de la tête est de 100 mm. et l'angle pantoscopique est de 12°. Le centre de rotation oculaire est le point noté Q' sur la figure 1.

L'inclinaison de la tête est donnée par la position du plan de FRANCFORT par rapport à l'horizontale, comme expliqué dans les demandes de brevet FR-A-2 683 642 et FR-A-2 683 643 au nom de la demanderesse.

Pour une tâche en vision de près, l'abaissement des yeux standard est de 33° et l'abaissement de la tête de 35° pour que le plan de travail soit parallèle à l'horoptère vertical moyen.

On choisit ensuite un environnement de travail, étape 20, figure 2, pour y positionner ensuite le porteur standard choisi à l'étape 10. On choisit par exemple un poste de travail à un bureau, décrit par un document de format connu (A4 par exemple) posé sur un plan de travail horizontal de dimensions connues également. Le point central M situé aux 2/3 hauts de ce document est le lieu où le porteur pose naturellement son regard et constituera un premier point de référence, pour la vision de près.

Ce point M est placé à la distance de vision de près donnée par l'addition et pour une inclinaison totale du regard standard de 68°, soit la somme de 33° et 35° par rapport à l'horizontale.

On a ainsi positionné le porteur standard dans un environnement donné. Ce positionnement ne dépend que des caractéristiques du porteur, et notamment de l'amétropie et de l'addition.

A l'étape 30 de la figure 2, on introduit une lentille et on calcule les variations de la direction du regard provoquées par la présence de la lentille. On effectue les calculs correspondants en approximation de lentille mince, en tous les points de la sphère des sommets. En d'autres termes, on considère en tout point de la sphère des sommets une lentille mince infinitésimale dont l'axe passe par le centre de rotation optique de l'oeil.

La figure 3 montre schématiquement les yeux droit OD et gauche OG et en pointillés la direction du regard, pour regarder le point de référence pour la vision de près M. On sait que la puissance porteur, dans la direction correspondant au regard du point M, est égale à la somme de la puissance en vision de loin et de l'addition. Lorsque l'on introduit sur le trajet du regard sur la sphère des sommets une lentille mince présentant une puissance correspondante, représenté en pointillés sur la figure 3, les rayons sont déviés, comme représenté en traits pleins sur la figure 3, de sorte que le point fixé n'est plus le point M mais le point M'. La figure 3 montre une vue en plan: il est toutefois clair que des déviations sont engendrées non seulement dans un plan horizontal, mais aussi dans un plan vertical.

L'inclinaison déterminée à l'étape 20 est ainsi modifiée par l'introduction du verre sur le chemin optique à cause des déviations prismatiques induites par la puissance rencontrée sur le verre qui doit être égale à la puissance VL prescrite majorée de l'addition prescrite.

A l'étape 40 de la figure 2, on détermine les mouvements des yeux et éventuellement de la tête permettant de corriger ces déviations prismatiques.

Par exemple, on peut considérer que la déviation prismatique verticale est compensée par un mouvement vertical des yeux et par des mouvements de la tête pour pouvoir fixer ce point. La part de chaque organe dans cette compensation dépend de l'amétropie du porteur. Pour des puissances VL inférieures à -2 dioptries, on considère que la compensation est totalement assurée par les yeux. Pour des amétropies de +2 dioptries et au-delà, la part de la tête dans la compensation est totale, c'est à dire que les yeux ne bougent pas. Pour des puissances VL entre -2 dioptries et +2 dioptries, on considère que la part de la tête dans la compensation augmente d'une façon linéaire: en d'autre termes, pour une puissance VL de-1 dioptrie, la déviation prismatique verticale est compensée à 75% par des mouvements oculaires et à 25% par des mouvements de la tête.

On considère que la déviation prismatique horizontale est compensée intégralement par des mouvements oculaires entraînant une modification de la convergence.

On effectue de nouveau les calculs en approximation de lentille mince en tout point de la sphère des sommets, comme expliqué en référence à l'étape 30.

A l'issue de l'étape 40, on a déterminé les mouvements des yeux et éventuellement de la tête permettant de corriger ces déviations prismatiques, et donc la direction du regard pour regarder le point de référence de la vision de près.

On connaît de ce fait les points sur les verres où la puissance doit être égale à la puissance VL prescrite majorée de l'addition prescrite. On connaît aussi le positionnement exact du porteur, du fait des mouvements oculaires et de la tête pour la compensation. On a ainsi déterminé les positions des centres de rotations des yeux et de la tête par rapport au document donc au plan de travail.

A l'étape 50 de la figure 2, on calcule à partir de la position ainsi déterminée l'accommodation subjective du porteur. De fait, on connaît la puissance sur le verre, la position du verre devant l'oeil et la distance objet pour regarder le point de référence de la vision de près.

L'accommodation subjective s'en déduit à l'aide de la formule

$$puissance\ porteur = proximité\ objet - accommodation$$

qui correspond à l'approximation lentille mince effectuée en tout point de la sphère des sommets.

A l'étape 60 de la figure 2, connaissant cette accommodation, et la direction du regard, on détermine la loi de Donders applicable au porteur. Cette loi fournit en fonction de l'âge, une relation entre la convergence et l'accommodation.

La figure 4 montre une représentation graphique de la loi de Donders. Sont représentées en abscisse la convergence en $m^{-1}$, et en ordonnée l'accommodation en dioptries. La courbe en traits interrompus montre la relation entre ces deux grandeurs, pour un porteur jeune (25 ans). Les courbes en traits pleins et en traits mixtes montrent respectivement la relation entre ces deux grandeurs, pour des porteurs de 41 et 50 ans.

Connaissant pour le point de référence de vision de près l'accommodation et la convergence, on détermine la pente de la partie linéaire de la courbe de Donders.

La limite de la partie horizontale de la courbe de Donders est donnée par l'accommodation maximale du porteur, qui dépend de l'âge. L'âge est relié à l'addition, sur la base d'études cliniques.

On connaît ainsi, après l'étape 60 de la figure 2 la droite de Donders qui nous permet ensuite de relier l'accommodation subjective à la convergence, pour le porteur choisi.

On a de la sorte une définition complète du porteur et de sa position dans son environnement. On détermine ensuite pour toute direction des yeux donc pour tout point des verres une puissance associée et une proximité objet, par balayage de l'environnement du porteur, comme expliqué en référence à la figure 5.

Pour cela, on se fixe une stratégie de balayage de l'environnement, et des règles de compensation des déviations prismatiques par les mouvements de la tête et des yeux.

Pour le balayage du document, on peut dire d'une manière générale que le porteur ne bouge la tête que pour compenser les déviations prismatiques verticales selon la règle décrite ci-dessus. La plus grande partie du balayage du document est donc assurée par des mouvements oculaires.

Au-dessus du document, la tête et les yeux se déplacent simultanément pour atteindre une position finale telle que l'inclinaison des yeux soit nulle lorsque l'inclinaison de la tête est nulle.

Par ailleurs au-delà du plan de travail la distance de l'objet est interpolée de façon linéaire à la position verticale des yeux dans les orbites entre la distance du bord du plan de travail et l'infini qui est la distance objet en vision de loin (inclinaison de la tête et des yeux nulle).

On définit ainsi une stratégie de balayage de l'environnement, i.e. un ensemble de points regardés dans l'environnement, et de positions associées des yeux et de la tête.

Pour chacun de ces points, connaissant la proximité objet, on détermine la direction du regard et la puissance nécessaire, comme expliqué maintenant, en référence à la figure 5.

A l'étape 100, on prend un point de l'environnement. Avantageusement, l'environnement est décrit en coordonnées angulaires ayant pour origine le centre de rotation de l'oeil pour la lentille duquel on effectue les calculs, et le balayage se fait d'une manière incrémentale de degré en degré en partant de la position la plus basse possible (80°) dans le plan sagittal.

A l'étape 110, pour ce point de l'environnement, on calcule une convergence, en l'absence de lentille: en effet, on connaît la distance du point au centre de rotation de l'oeil, et l'écart pupillaire du porteur.

A l'étape 120, connaissant cette convergence et la courbe de Donders du porteur, on détermine une accommodation, et on calcule la puissance nécessaire sur la lentille. De fait, la courbe de Donders fournit l'accommodation en fonction de la convergence; on calcule la puissance en approximation lentille mince, comme expliqué plus haut en référence à l'étape 50 de la figure 2.

L'étape 130 de la figure 5 correspond mutatis mutandis à l'étape 30 de la figure 2. A l'étape 130, l'introduction de la lentille présentant la puissance déterminée à l'étape 120 provoque des déviations prismatiques qui nécessitent pour compensation des mouvements des yeux et de la tête donc une modification de la distance du point regardé et de la convergence. Comme à l'étape 30, on effectue les calculs en approximation lentille mince en tout point de la sphère des sommets.

A l'étape 140, on calcule la nouvelle accommodation et la nouvelle puissance entraînées par ces modifications.

On repasse ensuite à l'étape 130, avec la nouvelle puissance calculée.

Par des itérations successives, i.e. par répétition des étapes 130 et 140, on minimise les erreurs de visée et on obtient en fin de compte une puissance pour laquelle le système est stabilisé. De fait, les calculs convergent, généralement au bout de 10 à 15 itérations.

A cette puissance correspondent une position de la tête et une position des yeux dans les orbites qui donne le lieu sur le verre où placer cette puissance, pour regarder le point de l'environnement choisi à l'étape 100.

On a ainsi déterminé pour une direction du regard, une proximité objet et une puissance de la lentille, permettant de regarder un point donné de l'environnement.

A l'étape 150, on passe au point suivant, de l'environnement, en suivant la stratégie de balayage expliquée plus haut, et on repasse à l'étape 110.

De la sorte, à la fin du balayage, on obtient un tableau de valeurs pour l'oeil droit et un tableau de valeurs pour l'oeil gauche contenant pour chaque position angulaire de l'oeil dans l'orbite, donc pour chaque point d'un verre, une puissance et une distance objet associées.

On a ainsi calculé, pour le porteur standard, dans un environnement donné, et pour une amétropie et une addition donnée, les puissance et proximité pour chaque direction du regard.

On peut de la sorte déterminer l'ergorama. Par exemple, on effectue les calculs décrits ci-dessus, pour des valeurs d'addition variant par pas de 0.25 entre 0.50 et 3.50 dioptries, et pour des valeurs de puissance en vision de loin variant par pas de 0.50 entre -12 et 12 dioptries.

Ainsi, on peut déterminer l'ergorama pour les différentes amétropies et additions. En résumé, on procède comme suit:

- on définit les caractéristiques standard d'un porteur, et notamment l'amétropie et l'addition;
- on définit un environnement, i.e. un ensemble de points à regarder;
- on calcule la direction du regard pour le point de vision de près, en approximation lentille mince en tout point de la sphère des sommets, pour une puissance déduite de l'amétropie et de l'addition;
- on en déduit la courbe de Donders du porteur, reliant l'accommodation et la convergence;
- on détermine la direction du regard et la puissance pour les autres points de l'environnement, par un processus itératif, en approximation lentille mince en tout point de la sphère des sommets, à partir de la courbe de Donders.

Cette définition de l'ergorama permet en outre de définir sur un verre une méridienne principale de progression, par un ensemble de directions du regard. La méridienne principale de progression est avantageusement définie à partir de l'ergorama et correspond, pour une amétropie et une addition donnée, à l'ensemble des directions du regard correspondant à des points de l'environnement situés dans le plan sagittal.

On peut bien entendu utiliser d'autres définitions de la méridienne principale de progression.

La figure 6 montre l'allure typique d'un ergorama le long de la méridienne, en dioptries, en fonction de l'angle alpha entre la direction du regard et le plan horizontal passant par le point Q', pour une amétropie correspondant à une puissance nulle en vision de loin, et une addition de 2,00 dioptries. On n'a représenté sur la figure 6 que les variations de l'ergorama en fonction de l'angle alpha. De fait, en première approximation, on peut raisonnablement considérer que l'ergorama n'est qu'une fonction de l'angle alpha et qu'il ne varie que peu en fonction de l'angle bêta. Typiquement, l'ergorama est nul au point de contrôle de la vision de loin, et il a une valeur de l'ordre de 2.5 à 3.5 dioptries au point de contrôle de la vision de près.

L'invention propose de considérer pour l'optimisation de la face asphérique d'une lentille, non pas les valeurs de sphère moyenne et du cylindre, mais les valeurs de puissance optique et d'aberration d'astigmatisme. La prise en compte de ces valeurs optiques et non plus surfaciques permet une meilleure définition de la face asphérique des lentilles et une meilleure préservation des propriétés optiques des lentilles, à addition constante, pour des puissances différentes.

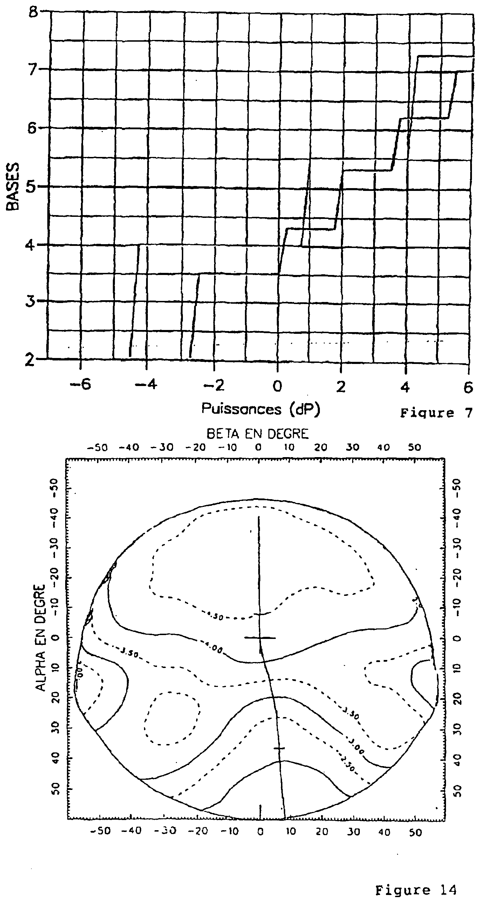

La figure 7 montre un exemple de la découpe de base qui peut être utilisée pour la réalisation de lentilles selon l'invention. La figure 7 représente en ordonnée les valeurs des bases, et en abscisses, les valeurs des puissances optiques correspondantes au point de référence. Comme le montre la figure, on peut utiliser pour définir les lentilles des valeurs de bases de 2, 3.5, 4.3, 5.3, et 6.2 dioptries. Pour une valeur de puissance optique, i.e. pour une valeur d'abscisse sur la figure 7, on utilise la valeur de base fournie par le graphique de la figure 7. Ce choix de cinq valeurs de base permet donc de couvrir toutes les puissances optiques porteur entre -6 et 6 dioptries.

L'invention propose de définir les lentilles à l'aide d'un programme d'optimisation des paramètres optiques des lentilles, avec les caractéristiques suivantes.

On définit une fonction de mérite à utiliser pour l'optimisation, par le choix d'une cible et de pondérations des différentes zones de la cible.

On décrit la cible, pour une amétropie donnée - par un choix de puissance en vision de loin - et pour une addition donnée.

Pour la puissance, on considère comme cible la puissance porteur donnée par l'ergorama, pour l'amétropie et l'addition choisies.

Pour l'aberration d'astigmatisme, on peut utiliser comme cible les résultats fournis par la mesure d'une lentille de l'art antérieur, comme par exemple les lentilles commercialisées par la demanderesse sous la marque "Comfort". Plus précisément, pour l'amétropie et l'addition donnée, on considère une lentille connue de même addition, de puissance nulle au point de vision de loin. On obtient ainsi une lentille connue qui présente l'addition et l'amétropie choisies.

On mesure pour cette lentille, à l'aide d'un programme de tracé de rayons, l'aberration d'astigmatisme, telle que définie plus haut, dans la situation du porté, et à partir des valeurs de proximité données par l'ergorama. On peut considérer les conditions du porté définies à la figure 1. On obtient ainsi dans chaque direction du regard, donnée par un couple (alpha, bêta) une valeur d'aberration d'astigmatisme.

On peut modifier ces valeurs, pour améliorer encore les performances, en diminuant les valeurs d'aberration d'astigmatisme obtenues dans les zones latérales, pour élargir la zone de vision de loin et la zone de vision de près.

On considère alors une lentille cible, dont les caractéristiques optiques sont les suivantes:

- sur la méridienne, définie par l'ergorama, puissance donnée par l'ergorama et aberration d'astigmatisme nulle;
- en dehors de la méridienne, puissance donnée par l'ergorama et aberration d'astigmatisme mesurée sur la lentille correspondante de l'art antérieur, le cas échéant modifiée.

On a ainsi dans chaque direction du regard, une valeur de puissance porteur et d'aberration d'astigmatisme, données par la lentille cible.

Le but du programme d'optimisation, en partant d'une lentille à optimiser, est de s'approcher autant que possible de la lentille cible. On peut pour cela considérer une fonction de mérite, représentative des écarts entre la lentille à optimiser et la lentille cible, définie comme suit. Pour un ensemble de points de la lentille, ou de la sphère des sommets,

ou encore de directions du regard, indicés par une variable i, on considère la fonction de mérite écrite sous la forme:

$$\Sigma p_i . \Sigma w_{ij} . (V_{ij} - C_{ij})^2$$

où $p_i$ est une pondération du point i;
$V_{ij}$ est la valeur du j-ième type de paramètre au point i;
$C_{ij}$ est la valeur cible du j-ième type de paramètre au point i;
$w_{ij}$ est la pondération du j-ième type de paramètre au point i.

On peut par exemple parvenir à des résultats appropriés en considérant un ensemble de 700 points, répartis sur la méridienne (70 points) et sur le reste de la lentille, avec une concentration plus importante autour de la méridienne.

On peut fixer j à 2, et utiliser des paramètres qui sont la puissance porteur et l'aberration d'astigmatisme, comme expliqué plus haut.

La pondération $p_i$ des points i permet d'affecter un poids plus ou moins important aux diverses régions de la lentille. Il est préférable de prévoir une pondération importante sur la méridienne, et de diminuer la pondération avec l'éloignement par rapport à la méridienne.

La valeur $V_{ij}$ est mesurée pour le point i par un programme de tracé de rayons, en utilisant les définitions de puissance porteur et d'aberration d'astigmatisme données plus haut, à partir de la valeur de proximité fournie par l'ergorama. $V_{i1}$ est la valeur de puissance porteur mesurée au point i et $V_{i2}$ est la valeur d'aberration d'astigmatisme mesurée au point i.

Plus précisément, on peut procéder comme suit. Dans la direction alpha bêta du point i, on construit par un programme de tracé de rayons le rayon issu du centre de rotation de l'oeil, qui traverse la face arrière de la lentille, la lentille, puis la face avant et débouche dans l'espace objet. On considère ensuite le point objet situé sur le rayon ainsi tracé à une distance de la face avant du verre égale à l'inverse de la proximité objet donnée par l'ergorama pour la direction alpha bêta. A partir de ce point objet, on trace une pluralité de rayons, par exemple trois, vers la lentille, pour reconstruire les points J et T de la figure 1; on procède ainsi à une évaluation exacte de l'image obtenue d'un point objet donné. On calcule ainsi la proximité image et l'aberration d'astigmatisme $V_{i2}$. A partir de l'ergorama et de la proximité image calculée, on détermine la puissance porteur $V_{i1}$ dans la direction alpha bêta.

Les valeurs $C_{ij}$ sont les valeurs cibles: dans l'exemple, $C_{i1}$ est la valeur de puissance porteur et $C_{i2}$ est la valeur d'aberration d'astigmatisme, au point i. $w_{ij}$ est la pondération du j-ième type de paramètre au point i. On peut ainsi privilégier, pour un point donné, la puissance porteur ou l'astigmatisme.

On définit donc de cette façon, une cible, et une fonction de mérite représentative des écarts des caractéristiques optiques d'une lentille par rapport à cette cible. Une telle fonction de mérite est évidemment positive et doit être minimisée au cours du processus d'optimisation.

Pour procéder à l'optimisation, il suffit alors de choisir une lentille de départ et une méthode de calcul permettant de faire diminuer par itérations la valeur de la fonction de mérite.

On peut avantageusement utiliser comme méthode de calcul une méthode des moindres carrés amortis, ou encore toute autre méthode d'optimisation connue en soi.

Pour une amétropie et une addition données, on peut considérer comme lentille de départ une lentille de l'art antérieur présentant une face asphérique de même addition, avec une valeur de base au point de contrôle de la vision de loin égale à celle donnée par la courbe de la figure 7; on associe à cette face asphérique une face sphérique permettant d'obtenir l'amétropie voulue, pour une épaisseur au centre donnée. Ainsi, pour une puissance donnée, la lentille de l'invention présente une surface avant plus plate qu'une lentille de l'art antérieur.

Pour procéder à l'optimisation, on peut avantageusement partir de cette lentille de départ, ajouter à la surface asphérique une nappe à optimiser, et ne modifier que cette nappe dans le processus d'optimisation. Par exemple, on peut utiliser comme nappe une modélisation par un polynôme de Zernike; ceci permet de faciliter les calculs de tracés de rayons, le polynôme de Zernike étant retranscrit en termes d'altitudes à la fin du processus d'optimisation, de sorte à obtenir une carte des altitudes des points de la face asphérique.

On arrive ainsi, pour une amétropie donnée et pour une addition donnée à une lentille optimisée, après itérations du programme d'optimisation. En utilisant une méthode des moindres carrés amortis, la fonction de mérite définie plus haut, et une telle lentille de départ, il suffit de procéder à une dizaine d'itérations, pour arriver dans la plupart des cas à une lentille présentant de bonnes performances.

Pour éviter de procéder à une optimisation pour chaque couple amétropie, addition, on peut choisir de ne procéder à l'optimisation que pour les valeurs centrales de puissance de chaque palier horizontal de la courbe de la figure 7. Pour les puissances voisines, on ajoute simplement à la lentille de départ la nappe asphérique calculée dans le programme d'optimisation. A posteriori, on vérifie que les performances optiques obtenues sont correctes, i.e. proches de la cible correspondante. Ainsi, dans l'exemple de découpe de base de la figure 7, on ne procède qu'à une optimisation pour toutes les puissances optiques porteur entre -2.5 et 0 dioptries, qui correspondent à une base de 3.5 dioptries,.

L'invention permet d'obtenir des résultats quasi identiques quelle que soit la puissance optique du porteur, pour une addition donnée.

Les figures suivantes montrent des exemples de lentilles selon l'invention et de lentilles connues. On utilise dans la suite les définitions suivantes de la zone de vision de loin, de la zone de vision intermédiaire et de la zone de vision de près: ces zones définies comme l'ensemble des directions du regard ou des points correspondants de la lentille dans lesquelles l'aberration d'astigmatisme est inférieure à 0.5 dioptries. On appelle ligne d'isoastigmatisme les lignes constituées de points pour lesquels l'aberration d'astigmatisme présente une valeur constante. L'aire de regard dans la zone de vision de loin est alors la surface que balaye le regard dans la zone de vision de loin, i. e. entre les lignes d'isoastigmatisme à 0.5 dioptries, le bord de la lentille et au dessus du centre géométrique de la lentille.

La largeur de champ en vision de près est alors la largeur angulaire à la hauteur du point de mesure de la vision de près, entre les lignes d'iso-astigmatisme 0.5 dioptries.

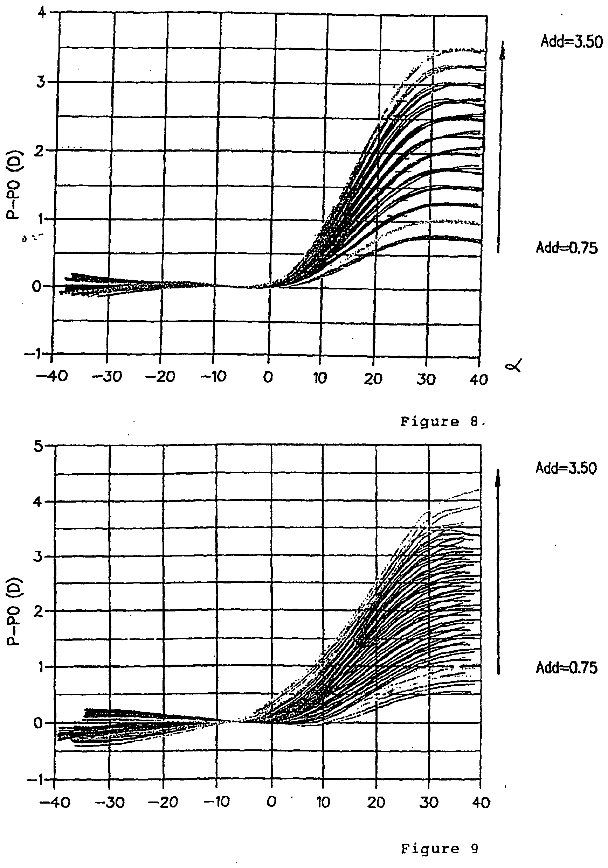

La figure 8 montre la variation de la puissance optique le long de la méridienne, pour les différentes additions, de 0.75 à 3.5 dioptries. On a porté en abscisse sur la figure 8 l'élévation du regard ou angle alpha, en degrés. En ordonnée, on a représenté la variation de puissance optique par rapport à la puissance optique au point de référence: cette variation est nulle au point de référence, situé sur la face avant de la lentille à 8 mm au dessus du centre géométrique, soit à un angle alpha de voisin de 8°. Pour chaque addition, on a représenté sur la figure 8 les différentes puissances optiques d'optimisation, qui sont celles définies plus haut (-4.5, -1.5, 1.3 et 4.75 dioptries).

On constate que pour une addition donnée, la puissance optique le long de la méridienne est quasiment identique quelle que soit la puissance au point de référence en VL. en d'autres termes, l'invention permet d'assurer un "mono-design optique", c'est à dire des performances optiques pour le porteur dans l'espace intermédiaire, i.e. dans l'espace verre oeil, qui sont indépendantes de la puissance en VL. On déduit aisément de la figure 8 les valeurs cibles de la puissance optique le long de la méridienne, qui sont quasiment atteintes.

La figure 9 montre à titre de comparaison les représentations graphiques correspondantes, pour une lentille de l'art antérieur. On constate sur la figure 9 une dispersion plus importante des valeurs de la puissance optique, pour une addition donnée, en fonction des différentes puissances en VL. Ceci montre bien comment l'invention permet d'améliorer les performances des lentilles connues.

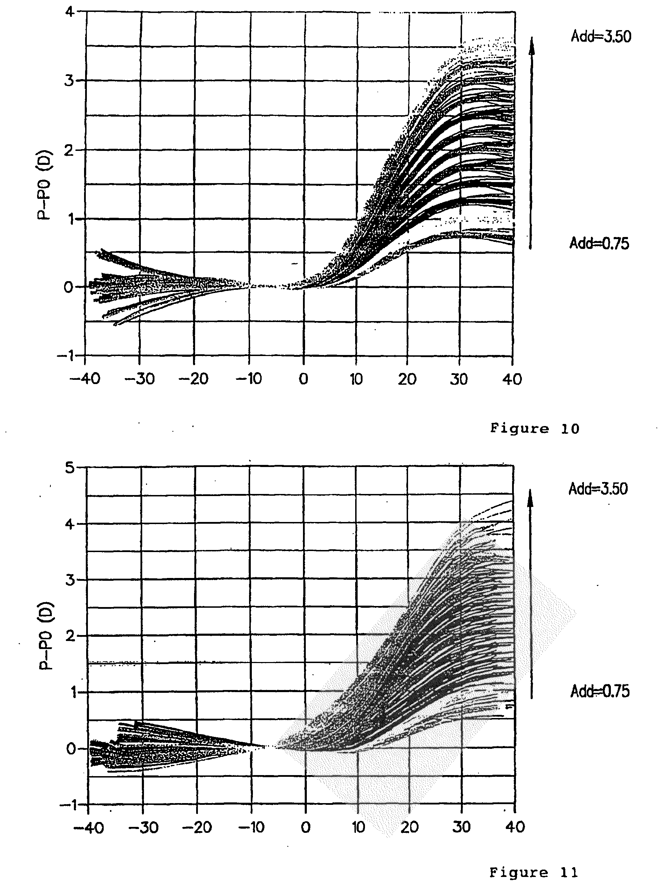

La figure 10 montre une représentation analogue à celle de la figure 8, dans laquelle on a toutefois rajouté les représentations graphiques des puissances optiques porteur pour des lentilles correspondant aux puissances optiques extrêmes pour chaque base, par exemple -2.25 et 0 dioptries pour la base 3.5 dioptries. On constate sur la figure 10 que les variations de puissance optique le long de la méridienne correspondent encore sensiblement aux valeurs de cibles de la figure 8. Autrement dit, l'invention assure encore des performances optiques comparables, même lorsque les faces arrières qui ont servi pour l'optimisation sont remplacées par des faces arrières différentes.

La figure 11 montre à titre de comparaison les représentations graphiques correspondantes, pour une lentille de l'art antérieur. On constate sur la figure 11 une dispersion bien plus importante des valeurs de la puissance optique, pour une addition donnée, en fonction des différentes puissances en VL.

Des résultats correspondants sont obtenus pour l'aberration d'astigmatisme. On assure notamment selon l'invention une aberration d'astigmatisme inférieure à 0.2 dioptries sur la méridienne, quelles que soient les puissances en VL et addition, et pour toutes les puissances optiques.

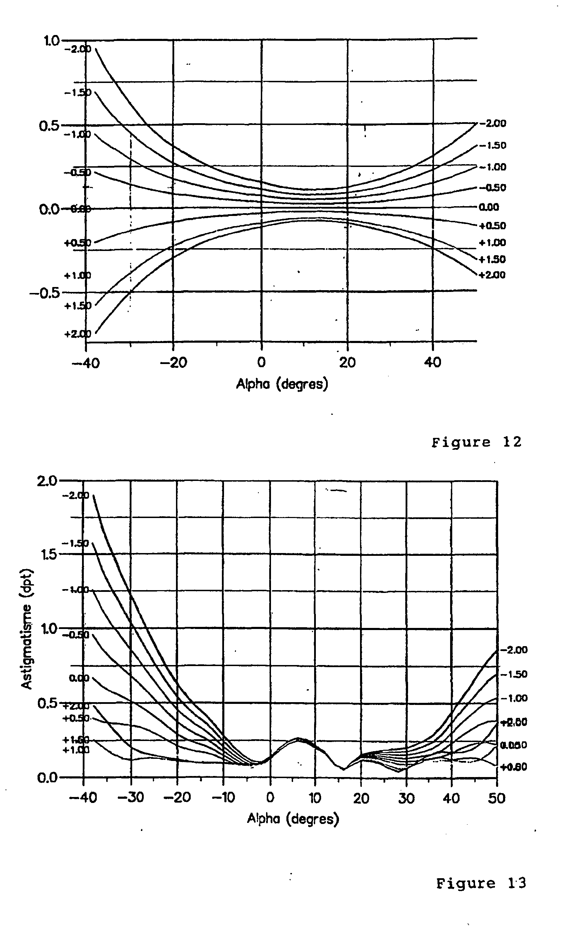

La figure 12 montre les résultats obtenus selon l'invention, en terme de variation par rapport à l'ergorama. Les différentes courbes de la figure 12 montrent la variation de puissance optique le long de la méridienne, lorsque l'on s'écarte de l'ergorama d'une valeur comprise entre +2.00 dioptries, et -2.00 dioptries, avec des pas de 0.25 dioptries. La courbe la plus basse sur la figure correspond à un écart de +2.00 dioptries, et la courbe la plus haute correspond à un écart de -2.00 dioptries. En ordonnée sont portées les variations par rapport à la puissance optique cible, et en abscisse l'élévation du regard (angle alpha). les courbes de la figure 12 correspondent à une lentille selon l'invention, d'une addition +3.50, et d'une puissance optique de 5 dioptries au point de référence (base 6.2 dioptries).

Il apparaît sur la figure 12 que la variation de la puissance optique reste inférieure à 0.125 dioptries, lorsque l'écart à l'ergorama est entre 0 et 0.5 dioptries dans la zone de vision de loin (alpha entre -30° et 0°). Dans la zone de vision de près (alpha entre 20° et 40°), la variation de la puissance optique reste inférieure à 0.125 dioptries, lorsque l'écart à l'ergorama est en valeur absolue inférieur à 1 dioptrie.

Pour la même lentille, la figure 13 montre des résultats correspondants, pour l'aberration d'astigmatisme. Comme à la figure 12, les variations de l'aberration d'astigmatisme restent faibles, même lorsque l'on s'écarte de l'ergorama utilisé dans l'invention. En vision de loin, les variations d'aberration d'astigmatisme restent en dessous de 0.125 dioptries pour des écarts à l'ergorama allant jusqu'à 0 et 0.50 dioptries. En vision de près, les écarts à l'ergorama peuvent atteindre 1 dioptrie sans que l'aberration d'astigmatisme ne varie de plus de 0.125 dioptrie.

On retrouve des résultats analogues en terme de largeur de champ au point de mesure de la vision de près: la largeur de champ ne varie pas de plus de 15% autour de la valeur nominale lorsque l'écart à l'ergorama est inférieur à une dioptrie.

En vision de loin, l'aire de regard (aire à l'intérieur de l'iso-astigmatisme à 0.5 dioptries) ne varie pas plus de 15% lorsque l'écart à l'ergorama est inférieur à 1 dioptrie.

En d'autres termes, et par rapport à l'ergorama cible utilisé dans la définition de la puissance optique, des écarts sont possibles, tout en assurant que la puissance optique et l'aberration d'astigmatisme, la largeur de champ en vision de près ou l'aire de regard en vision de loin varient faiblement. Même si le porteur des lentilles n'a pas un ergorama correspondant à celui utilisé dans l'invention, les résultats de la lentille de l'invention restent satisfaisants: des performances optiques comparables sont assurées pour toutes les valeurs de base et de puissance optique, pour une addition donnée, tout en préservant la simplicité de l'usinage de la face arrière des lentilles.

Les figures 14 à 22. montrent les résultats obtenus grâce à l'invention, en comparaison avec les résultats de lentilles selon l'art antérieur.

On a représenté sur les figures 14 à 22, pour une lentille de l'art antérieur et pour des lentilles selon l'invention, des lignes de niveau de la puissance optique (ou de l'aberration d'astigmatisme). i.e. des lignes constituées de points présentant une puissance optique identique (ou une aberration d'astigmatisme identique). Les lignes sont représentées pour des valeurs de la puissance optique (ou de l'aberration d'astigmatisme) allant de 0.25 en 0.25 dioptries; seules les valeurs entières où demi-entières de la puissance optique (ou de l'aberration d'astigmatisme) sont portées sur les figures, et les valeurs intermédiaires (0.25. 0.75. 1.25 etc.) ne sont pas portées sur les figures.

Les lentilles sont représentées dans un repère en coordonnées sphériques, l'angle bêta étant porté en abscisse et l'angle alpha en ordonnée.

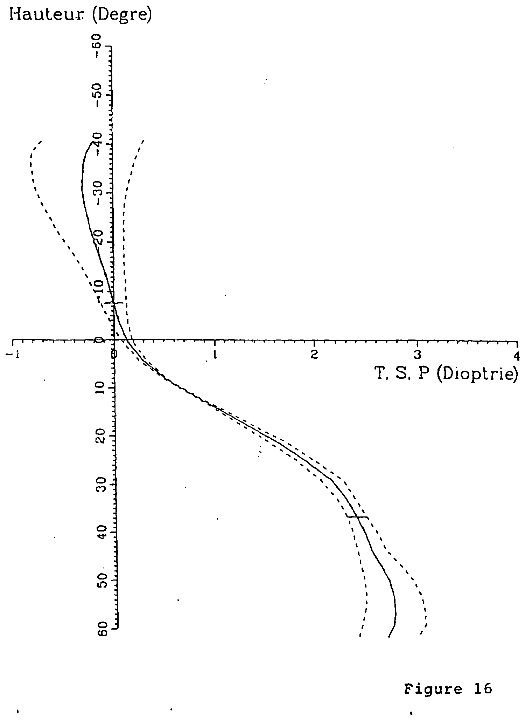

On a représenté sur les figures 16, 19 et 22 la puissance optique le long de la méridienne, en traits pleins; apparaissent aussi en traits pointillés les puissances optiques minimale et maximale, correspondant respectivement à

- la somme de l'ergorama et de 1/JS;
- la somme de l'ergorama et de 1/JT.

Sur les figures 16, 19 et 22, on a porté en ordonnée l'angle alpha en degrés, et en abscisse la puissance optique en dioptries.

Les figures 14 à 16 montrent une lentille de l'art antérieur, de diamètre 70 mm; la face avant de ce verre est une surface multifocale progressive, de base 2 dioptries, d'addition 2. La face arrière est choisie de sorte à présenter une puissance optique en vision de loin de-4.5 dioptries, et présente un prisme de 1.36°. Le plan du verre est incliné par rapport à la verticale de 12°, et présente une épaisseur au centre de 1.2 mm. On a considéré la valeur de q' de 27 mm mentionnée en référence à la figure 1.

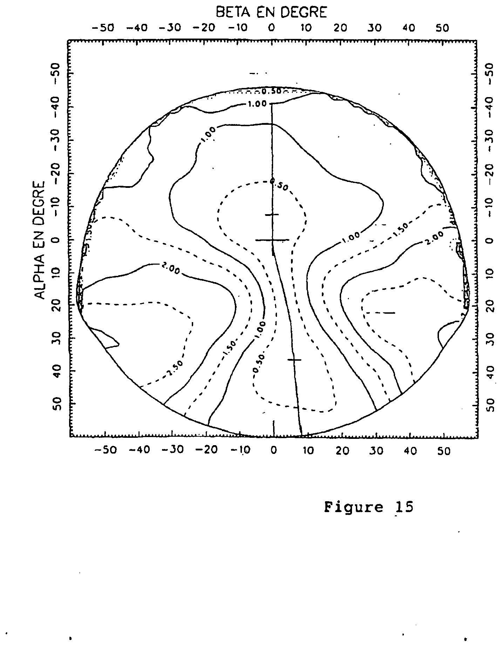

La figure 14 montre les lignes de niveau de la puissance optique, et la figure 15 les lignes de niveau de l'aberration d'astigmatisme.

La figure 16 montre la puissance optique, et les puissances optiques minimale et maximale le long de la méridienne optique. Au point de mesure de la vision de loin, comme indiqué, la puissance optique est de -4.5 dioptries. L'aberration d'astigmatisme est de 0.26 dioptries. Au point de mesure de la vision de près, la puissance optique est de -2.10 dioptries. L'aberration d'astigmatisme est de 0.19 dioptries. L'addition optique réelle est donc de 2.4 dioptries.

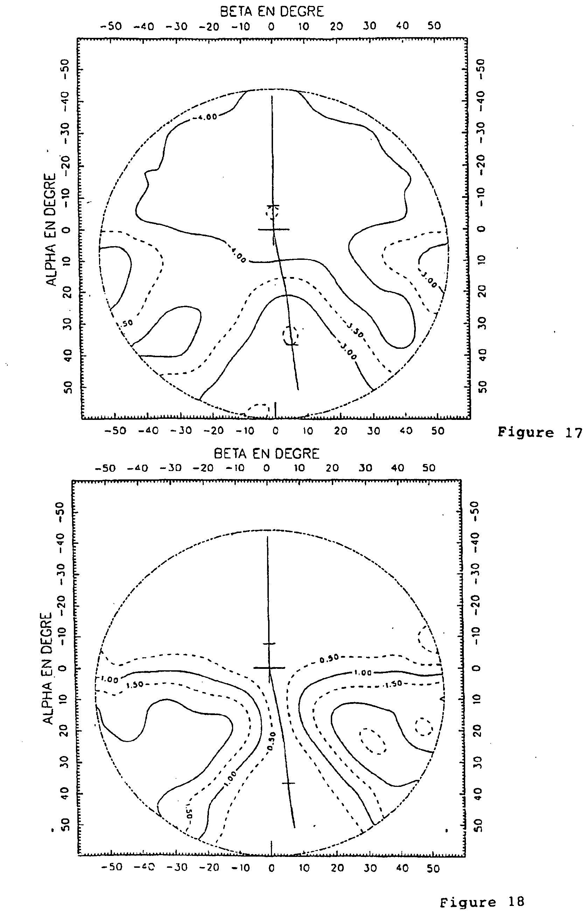

Les figures 17 à 19 montrent des figures correspondantes pour une première lentille selon l'invention, de diamètre 70 mm; la face avant de ce verre est une surface multifocale progressive, de base 2.0 dioptries, d'addition 2.0. La face arrière est choisie de sorte à présenter une puissance optique en vision de loin de -4.5 dioptries, et présente un prisme de 1.36°. Le plan du verre est incliné par rapport à la verticale de 12°, et présente une épaisseur au centre de 1.2 mm. On a considéré la valeur de q' de 27 mm mentionnée en référence à la figure 1.

La figure 17 montre les lignes de niveau de la puissance optique, et la figure 18 les lignes de niveau de l'aberration d'astigmatisme.

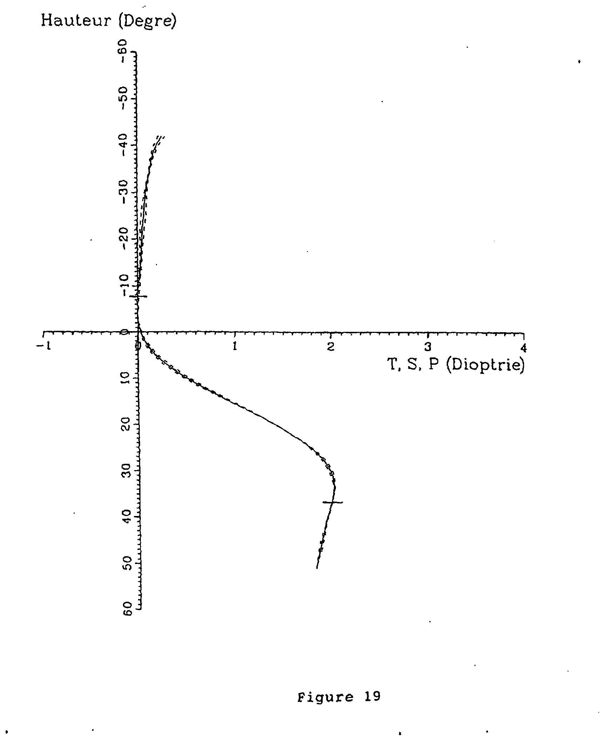

La figure 19 montre la puissance optique, et les puissances optiques minimale et maximale le long de la méridienne optique. Au point de mesure de la vision de loin, comme indiqué, la puissance optique est de -4.50 dioptries. L'aberration d'astigmatisme est de 0.02 dioptries. Au point de mesure de la vision de près, la puissance optique est de -2.50 dioptries. L'aberration d'astigmatisme est de 0.01 dioptries. L'addition optique réelle est donc de 2.00 dioptries.

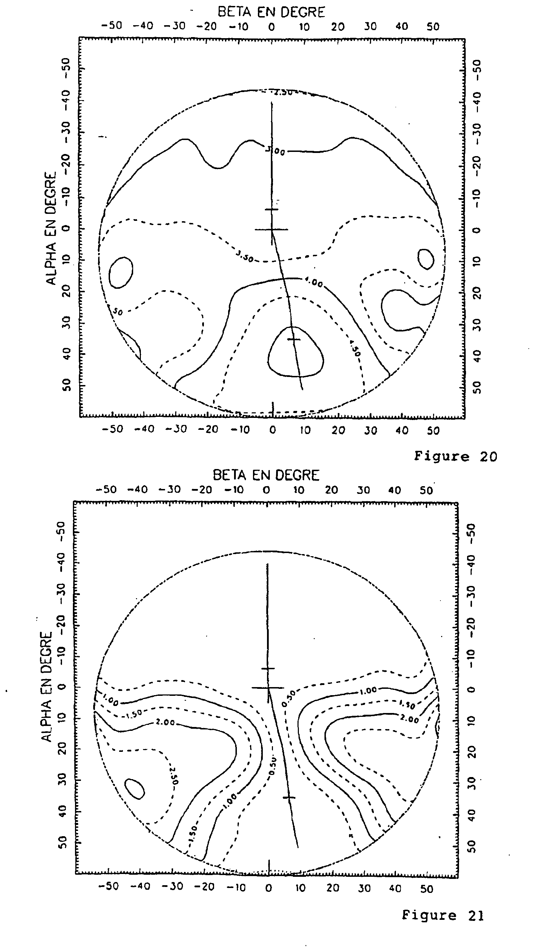

Les figures 20 à 22 montrent des figures correspondantes pour une deuxième lentille selon l'invention, identique à la première, avec toutefois une base de 5.3 dioptries, une addition de 2 dioptries, et une puissance optique de 3 dioptries, et une épaisseur au centre de 4.7mm.

La figure 20 montre les lignes de niveau de la puissance optique, et la figure 21 les lignes de niveau de l'aberration d'astigmatisme.

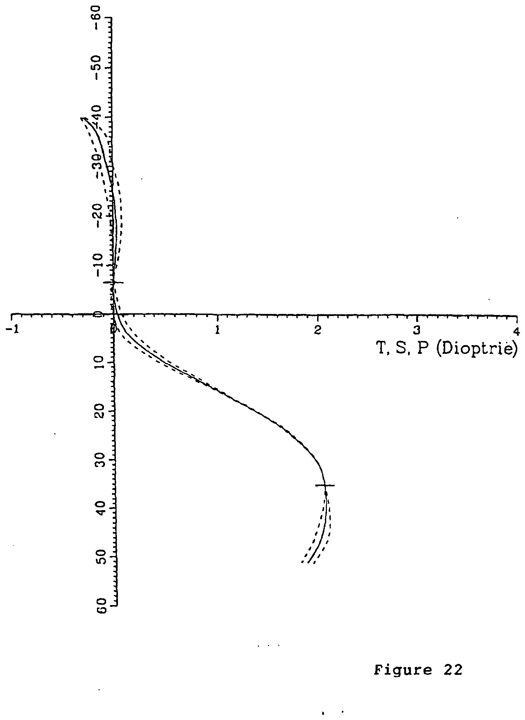

La figure 22 montre la puissance optique, et les puissances optiques minimale et maximale le long de la méridienne optique. Au point de mesure de la vision de loin, comme indiqué, la puissance optique est de 3 dioptries. L'aberration d'astigmatisme est de 0.02 dioptries. Au point de mesure de la vision de près, la puissance optique est de 5.06 dioptries. L'aberration d'astigmatisme est de 0.01 dioptries. L'addition optique réelle est donc de 2.06 dioptries.

La comparaison de ces figures permet de bien mettre en évidence les avantages de l'invention.

Tout d'abord, l'invention permet par rapport à l'art antérieur, de bien tenir compte des différentes faces arrières, et d'obtenir des résultats satisfaisant pour le porteur, non pas en termes de sphère moyenne et de cylindre, mais bien de puissance optique et d'aberration d'astigmatisme. On constate notamment une forte diminution de l'aberration d'astigmatisme le long de la méridienne, les courbes de puissance optique, de puissance optique minimale et de puissance optique maximale étant quasiment confondues dans les lentilles de l'invention. Plus précisément, pour les deux lentilles des figures 17 à 22 comme pour les autres lentilles de l'invention, on assure que l'aberration d'astigmatisme reste inférieure à 0.2 dioptries le long de la méridienne.

Ensuite, l'invention permet d'assurer, pour une même addition, des performances quasi comparables: les figures 18 et 21 présentent des allures analogues, et assurent des zones de vision de loin de vision de près sensiblement identiques, et plus étendues que dans la lentille de la figure 15.

La largeur de champ en vision de près, dans les deux lentilles de l'invention, est respectivement de 24° et 26°. Dans la lentille de l'art antérieur, elle n'est que de 18°. La largeur de champ est supérieure dans les deux lentilles des figures 17 à 22 comme dans les autres lentilles de l'invention à 21/A + 10 degrés, A étant l'addition.

Qualitativement, l'invention propose un jeu de lentilles dans lequel les performances optiques des différentes lentilles sont sensiblement identiques pour une même addition, indépendamment de la puissance optique au point de mesure de la zone de vision de loin: ceci correspond à un "mono-design optique".

Plus précisément, selon l'invention, l'aire de regard en vision de loin, définie plus haut, varie de moins de 15% pour une même addition, quelle que soit la puissance optique au point de mesure de la zone de vision de loin.

Selon l'invention, la largeur de champ en vision de près, qui est aussi définie plus haut, varie de moins de 15% pour une même addition, quelle que soit la puissance optique au point de mesure de la zone de vision de loin.

Bien entendu, il est possible d'inverser les termes de face avant et de face arrière, i.e. de prévoir que la surface asphérique multifocale de la lentille se trouve tournée vers le porteur, sans que cela ne modifie l'invention. On peut aussi changer de méthode d'optimisation, de surface de départ, ou encore utiliser d'autres définitions de la puissance optique et de l'aberration d'astigmatisme.

**Revendications**

1. Jeu de lentilles ophtalmiques multifocales progressives, déterminées au moyen d'ergoramas associant à chaque direction du regard une proximité objet et une puissance porteur, pour une amétropie et une addition données d'un porteur de lentille standard,

dans lequel pour une lentille dans les conditions du porté pour un porteur de lentille standard, une puissance porteur est définie en une direction du regard et pour un point objet comme la somme de la proximité objet et de la proximité image dudit point objet,

dans lequel chacune des lentilles présente une première et une deuxième surface, la première surface étant une surface multifocale progressive et la deuxième surface étant une surface sphérique;

une zone de vision de loin, une zone de vision de près et une méridienne principale de progression traversant ces deux zones, les zones de vision de loin et de près et la méridienne étant des ensembles de directions du regard dans les conditions du porté;

une addition de puissance A égale à la variation de puissance porteur pour le point visé de l'ergorama entre une direction du regard de référence dans la zone de vision de loin et une direction du regard de référence dans la zone de vision de près;

et dans lequel, les variations le long de la méridienne, de la puissance porteur pour le point visé de l'ergorama, sont sensiblement identiques pour toutes les lentilles du jeu présentant la même addition.

2. Jeu de lentilles selon la revendication 1, dans lequel les lentilles présentent chacune une addition prescrite choisie dans un ensemble discret, la différence d'addition de puissance A entre deux lentilles du jeu ayant la même addition prescrite étant inférieure ou égale à 0.125 dioptries.

3. Jeu de lentilles selon la revendication 1 ou 2, dans lequel, pour toute lentille, sur la méridienne, l'aberration d'astigmatisme pour le point visé de l'ergorama est inférieure ou égale à 0.2 dioptries.

4. Jeu de lentilles selon l'une des revendications 1 à 3, dans lequel, pour chacune des lentilles dans les conditions du porté pour un porteur de lentille standard, la largeur angulaire en degrés entre les lignes pour lesquelles l'aberration d'astigmatisme pour les points de l'ergorama vaut 0.5 dioptries, à 25° sous un point de montage de la lentille présente une valeur supérieure à 15/A + 1, A étant l'addition de puissance.

5. Jeu de lentilles selon l'une des revendications 1 à 4, dans lequel, pour chacune des lentilles dans les conditions du porté pour un porteur de lentille standard, la largeur angulaire en degrés entre les lignes pour lesquelles l'aberration d'astigmatisme pour les points de l'ergorama vaut 0.5 dioptries, à 35° sous un point de montage de la lentille présente une valeur supérieure à 21/A + 10, A étant l'addition de puissance.

**6.** Jeu de lentilles selon l'une des revendications 1 à 5, dans lequel, pour chacune des lentilles dans les conditions du porté pour un porteur de lentille standard, l'angle solide borné par les lignes pour lesquelles l'aberration d'astigmatisme pour les points de l'ergorama vaut 0.5 dioptries, et les points situés à un angle de 45° d'un point de montage de la lentille présente une valeur supérieure à 0.70 stéradians.

**7.** Jeu de lentilles selon l'une des revendications 1 à 6, dans lequel pour chacune des lentilles dans les conditions du porté pour un porteur de lentille standard, dans la zone de vision de loin, dans chaque direction du regard, la différence de puissance porteur entre le point visé de l'ergorama et les points objets dont la proximité présente une différence avec la proximité dudit point visé comprise entre 0 et 0.5 dioptries, est inférieure ou égale à 0.125 dioptries en valeur absolue.

**8.** Jeu de lentilles selon l'une des revendications 1 à 7, dans lequel pour chacune des lentilles dans les conditions du porté pour un porteur de lentille standard, dans la zone de vision de près, dans chaque direction du regard, la différence de puissance porteur entre le point visé de l'ergorama et les points objets dont la proximité présente une différence avec la proximité dudit point visé inférieure à 1 dioptrie en valeur absolue, est inférieure ou égale à 0.125 dioptries en valeur absolue.

**9.** Jeu de lentilles selon l'une des revendications 1 à 8, dans lequel, pour chacune des lentilles dans les conditions du porté pour un porteur de lentille standard, dans la zone de vision de loin, dans chaque direction du regard, la différence d'aberration d'astigmatisme entre le point visé de l'ergorama et les points objets dont la proximité présente une différence avec la proximité dudit point visé comprise entre 0 et 0.5 dioptries, est inférieure ou égale à 0.125 dioptries en valeur absolue.

**10.** Jeu de lentilles selon l'une des revendications 1 à 9, dans lequel, pour chacune des lentilles dans les conditions du porté pour un porteur de lentille standard, dans la zone de vision de près, dans chaque direction du regard, la différence d'aberration d'astigmatisme entre le point visé de l'ergorama et les points objets dont la proximité présente une différence avec la proximité dudit point visé en valeur absolue inférieure à 1 dioptrie, est inférieure ou égale à 0.125 dioptries en valeur absolue.

**Patentansprüche**

**1.** Satz an ophthalmischen multifokalen Gleitsichtlinsen, bestimmt mittels Ergoramas, die jeder Blickrichtung eine Objektentfernung und eine Trägerstärke für eine gegebene Fehlsichtigkeit und eine gegebene Addition eines Standardlinsenträgers zuordnen, bei welchem für eine Linse in den Tragebedingungen für einen Standardlinsenträger eine Trägerstärke in einer Blickrichtung und für einen Objektpunkt definiert ist als die Summe der Objektentfernung und der Bildentfernung des Objektpunktes, wobei jede der Linsen aufweist,

- eine erste und eine zweite Fläche, wobei die erste Fläche eine multifokale Gleitsicht- oder Progressivfläche Ist und die zweite Fläche eine sphärische fläche ist;
- eine Fernsichtzone, eine Nahsichtzone und einen Hauptprogressionsmeridian, der diese zwei Zonen durchquert, wobei die Fern- und Nahsichtzonen und der Hauptprogressionsmeridian die Blickrichtungsgesamtheiten in den Tragebedingungen sind;
- eine Stärkeaddition A, gleich zu der Veränderung der Trägerstärke für den Punkt, auf den das Ergorama abzielt, zwischen einer Bezugsblickrichtung in der Fernsichtzone und einer Bezugsblickrichtung in der Nahsichtzone; und
- bei welchem die Veränderungen der Trägerstärke entlang des Meridians für den Punkt, auf den das Ergorama abzielt, praktisch identisch für alle Linsen des Satzes sind, die über dieselbe Addition verfügen

**2.** Satz an Linsen nach Anspruch 1, bei welchem die Linsen jeweils eine gewählte verschriebene Addition in einer diskreten Gesamtheit aufweisen, wobei die Differenz der Stärkeaddition A zwischen zwei Linsen des Satzes, der dieselbe vorgeschriebene Addition zeigt, kleiner oder gleich zu 0,125 Dioptrien ist.

**3.** Satz an Linsen nach Anspruch 1 oder 2, bei welchem für jede Linse die Astigmatismusaberration

- für den von dem Ergorama erfaßten oder abzustellenden Punkt an dem Meridian kleiner oder gleich ist zu 0,2 Dioptrien.

**4.** Satz an Linsen nach einem der Ansprüche 1 bis 3, bei welchem für jede der Linsen in den Tragebedingungen für einen Standardlinsenträger die Winkelbreite in Grad zwischen den Linien,

- für welche die Astigmatismusaberration für Ergoramapunkte entsprechend 0,5 Dioptrien, bei 25° unter einem Montagepunkt der Linse einen Wert von mehr als $15/A + 1$ aufweist, wobei A die Stärkeaddition ist.

**5.** Satz an Linsen nach einem der Ansprüche 1 bis 4, bei welchem für jede der Linsen in den Tragebedingungen

- für einen Standardlinsenträger die Winkelbreite in Grad zwischen Linien, für welche die Astigmatismusaberration für Ergoramapunkte entsprechend 0,5 Dioptrien bei 35° unter einem Montagepunkt der Linse einen Wert von mehr als 21/A + 10 aufweist, wobei A die Stärkeaddition ist.

6. Satz an Linsen nach einem der Ansprüche 1 bis 5, bei welchem für jede der Linsen in den Tragebedingungen für einen Standardlinsenträger der feste Winkel, begrenzt durch Linien,

- für welche die Astigmatismusaberration für Ergoramapunkte entsprechend 0,5 Dioptrien, und die Punkte, die sich bei einem Winkel von 45° bezüglich eines Montagepunktes der Linse befinden, einen Wert von mehr als 0,70 Steradians aufweist.

7. Satz an Linsen nach einem der Ansprüche 1 bis 6, bei welchem für jede der Linse in den Tragebedingungen für einen Standardlinsenträger in der Fernsichtzone bei jeder Blickrichtung die Trägerstärkendifferenz zwischen dem von dem Ergorama erfaßten Punkt bzw. dem Punkt, auf den das Ergorama abzielt und den Objektpunkten, deren Nähe oder Entfernung eine Differenz aufweist mit der Entfernung oder Nähe des erfaßten Punktes, enthalten zwischen 0 und 0,5 Dioptrien, kleiner oder gleich ist zu 0,125 Dioptrien als Absolutwert.

8. Satz an Linsen nach einem der Ansprüche 1 bis 7, bei welchem für jede der Linsen in den Tragebedingungen für einen Standardlinsenträger oder einen Träger einer Standardlinse in der Nahsichtzone in jeder Blickrichtung die Trägerstärkendifferenz zwischen dem von dem Ergorama erfaßten Punkt bzw. dem Punkt, auf den das Ergorama abzielt, und den Objektpunkten, deren Entfernung oder Nähe eine Differenz aufweist mit der Entfernung oder Nähe des erfaßten Punktes, kleiner als 1 Dioptrie als Absolutwert, kleiner oder gleich ist zu 0,125 Dioptrien als Absolutwert.

9. Satz an Linsen nach einem der Ansprüche 1 bis 8, bei welchem für jede der Linsen in den Tragebedingungen eines Standardlinsenträgers in der Fernsichtzone bei jeder Blickrichtung die Differenz der Astigmatismusaberration zwischen dem von dem Ergorama erfaßten Punkt und den Objektpunkten, deren Nähe oder Entfernung eine Differenz mit der Entfernung oder Nähe des erfaßten Punktes aufweist, enthalten zwischen 0 und 0,5 Dioptrien, kleiner oder gleich ist zu 0,125 Dioptrien als Absolutwert.

10. Satz an Linsen nach einem der Ansprüche 1 bis 9, bei welchem für jede der Linsen unter Tragebedingungen für einen Träger von Standardlinsen bzw. unter Tragebedingungen für einen Standardlinsenträger in der Nahsichtzone bei jeder Blickrichtung die Differenz der Astigmatismusaberration zwischen dem von dem Ergorama erfaßten Punkt bzw. dem Punkt, auf den das Ergorama abzielt, und den Objektpunkten, deren Nähe oder Entfernung eine Differenz aufweist mit der Entfernung oder Nähe des erfaßten oder abgezielten Punktes, im Absolutwert geringer als 1 Dioptrie, kleiner oder gleich ist zu 0,125 Dioptrien als Absolutwert.

**Claims**

1. A set of progressive multifocal ophthalmic lenses determined by means of ergoramas which associate, for each lens, a point towards which the glance is directed with each direction of glance, under wearing conditions, in which, for a lens under the conditions in which it is worn, a wearer power is defined in a direction of glance and for an object point, as the sum of the the degree of nearness of an object and the degree of nearness of the image of said object point, in which each one of said lenses has:

- a first and a second surface, said first surface being a progressive multifocal surface and said second surface being a spherical surface ;
- a far vision region, a near vision region and a main meridian of progression passing throughtwo regions, said far vision region, near vision region and meridian being sets of directions of glance under the wearing conditions;
- a power addition A equal to a variation in wearer power for the point towards which the glance is directed in the ergorama, between a reference direction of glance in the far vision region and a reference direction of glance in the near vision region;
- and in which variations in wearer power along said meridian, for the said point towards which the glance is directed in the ergorama are substantially identical for each one of the lenses of a set having the same power addition.

2. The set of lenses according to claim 1 in which said lenses each have a prescribed power addition selected within a discrete set, a difference in power addition A between two lenses of said set having the same prescribed power addition being less than or equal to 0.125 diopters.

3. The set of lenses according to claim 1 or 2 in which, with astigmatism aberration in a direction of glance, under wearing conditions, being defined for an object point,

- for each lens, along said meridian, astigmatism aberration for a point towards which the glance is directed in the ergorama is less than or equal to 0.2 diopters.

4. The set of lenses according to one of claims 1 to 3, in which, with astigmatism aberration in a direction of glance, under wearing conditions, being defined for an object point,

- for each one of said lenses under wearing conditions, angular width in degrees between lines for which astigmatism aberration for points on the ergorama is 0.5 diopters, at 25° below a mounting cross on said lens, has a value greater than 15/A + 1, A being the power addition.

5. The set of lenses according to one of claims 1 to 4 in which, with astigmatism aberration in a direction of glance under wearing conditions being defined for an object point,

- for each one of said lenses under wearing conditions, an angular width in degrees between lines for which astigmatism aberration for points on said ergorama is 0.5 diopters, at 35° below a lens mounting cross, has a value greater than 21/A +10, A being the power addition.

6. The set of lenses according to one of claims 1 to 5, in which, with astigmatism aberration in a directionglance under wearing conditions being defined for an object point,

- for each one of said lenses under wearing conditions, a solid angle bounded by lines for which astigmatism aberration for points in said ergorama equals 0.5 diopter, and points situated at an angle of 45° with respect to a mounting cross on said lens has a value greater than 0.70 steradians

7. The set of lenses according to one of claims 1 to 6 in which, for each one of said lenses under their wearing conditions, wearer power difference in the far vision region, in each direction of glance, between a point towards which the glance is directed in said ergorama and object points the degree of nearness of which differs from the degree of nearness of said point towards which the glance is directed by between 0 and 0.5 diopters, is less than or equal to 0.125 diopters as an absolute value.

8. The set of lenses according to one of claims 1 to 7, in which, for each one of said lenses under their wearing conditions, wearer power difference in the near vision region, in each direction of glance, between a point towards which the glance is directed in said ergorama and object points the degree of nearness of which differs from the degree of nearness of said point towards which the glance is directed by an absolute value of less than 1 diopter, is less than or equal to 0.125 diopters as an absolute value.

9. The set of lenses according to one of claims 1 to 8, in which, with astigmatism aberration and direction of glance under wearing conditions being defined for an object point, for each one of said lenses under wearing conditions, a difference in astigmatism aberration in the far vision region, in each direction of glance, between a point towards which the glance is directed in said ergorama and object points the degree of nearness of which differs from the degree of nearness of said point towards which the glance is directed by between 0 and 0.5 diopters, is less than or equal to 0.125 diopters as an absolute value.

10. The set of lenses according to one of claims 1 to 9 in which, with astigmatism aberration and direction of glance under wearing conditions being defined for an object point, for each one of said lenses under wearing conditions, a difference in astigmatism aberration in the near vision region, in each direction of glance, between a point towards which the glance is directed in said ergorama and object points the degree of nearness of which differs from the degree of nearness of said point towards which the glance is directed by an absolute value of less than 1 diopter, is less than or equal to 0.125 diopters as an absolute value.

Figure 1

Figure 6

10 — choisir le porteur standard

20 — choisir l'environnement standard

30 — introduire une lentille de puissance VP et calculer les déviations

figure 2

40 — calculer les mouvements nécessaires pour corriger ces déviations

50 — calculer l'accommodation du porteur pour le point de référence en VP

60 — calculer la courbe de Donders (voir fig. 4)

M

M'

OG          OD

Figure 3

16

100 — choisir un point de
l'environnement

110 — calculer une convergence
sans lentille

120 — calculer
l'accommodation et la
puissance de la lentille

130 — introduire une lentille de
cette puissance et
calculer les déviations

140 — calculer les mouvements
nécessaires pour corriger
ces déviations, et calculer
une nouvelle puissance

150 — passer au point suivant
de l'environnement

itérations pour
balayer tout
l'environnement

itérations
jusqu'à
convergence

figure 5

Figure 4

Figure 8.

Figure 9

Figure 10

Figure 11

Figure 12

Figure 13

Figure 7

Figure 14

BETA EN DEGRE

Figure 15

Figure 16

BETA EN DEGRE

Figure 17

BETA EN DEGRE

Figure 18

24

Hauteur (Degre)

T, S, P (Dioptrie)

Figure 19

Figure 20

Figure 21

Figure 22

**EP 0 927 377 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- US 5444503 A
- FR 2683643 A